# EUROPEAN PATENT APPLICATION

(11) **EP 2 189 421 A1**
(43) Date of publication of application: **26.05.2010**
(21) Application number: 09175527.2
(22) Date of filing: 10.11.2009
(51) Int. Cl.: C02F 1/00, G01F 1/07, G01F 3/28

(54) **A total mass flow meter and a water purification device**

(30) Priority: 24.11.2008 IN MU24702008
(71) Applicant: Unilever N.V., 3013 AL Rotterdam (NL); Unilever PLC, 100 Victoria Embankment London, Greater London EC4Y 0DY (GB)
(72) Inventor: Franklin, David Chandra, 560 066, Bangalore (IN); Mahapatra, Samiran, 560 066, Bangalore (IN); Ramachandran, Rajeeshkumar, 560 066, Bangalore (IN); Venkataraghavan, Rajanarayana, 560 066, Bangalore (IN)
(74) Representative: Rosen Jacobson, Frans Lucas M.

(57) **Abstract**

The present invention relates to a total mass flow meter and a water purification device comprising the total mass flow meter. It is an object of the present invention to provide a mass flow meter that can be usefully installed in a gravity fed water purification device.

The present invention provides a total mass flow meter with a bucket wheel assembly with axis of the wheel not being vertical allows measurement of total mass flow, even with very low liquid velocities or with intermittent flow and can be effectively used as an end-of-life indicator in a gravity fed water purification system.

## Description

### Technical Field

The invention relates to a total mass flow meter and a water purification device comprising the total mass flow meter.

### Background and Prior Art

Total mass flow metes measure the total amount of liquid that flows through them. Flow rate meters that measure the rate of flow may be adapted as total mass flow meters only under certain conditions. In conventional flow rate meters, a liquid impinges upon a paddle of a turbine wheel and the number of revolutions of the wheel is indicative of the amount of liquid passed through the meter. Such flow meters require that the water flows with a certain minimum velocity to impart sufficient torque to rotate the wheel. Therefore, in the applications where velocity of water is low and/or flow is intermittent, such flow meters do not indicate correct total mass flow. In particular, if the flow rate is relatively small or the water flows under relatively small gravity head, the velocity of water is inadequate to provide sufficient torque and the flow rate meters fail to function as total mass flow meters.

Bucket wheel type or Price AA meters with hollow cups are known for measurement of water flow velocities in open channels. For example, refer the website, http://newton.bhsu.edu/eps/priceaa.htm. In use, the axis of the wheel is vertical and the torque is provided by the velocity of water. US7017425 (Vaugn et al, 2006) describes a bucket wheel assembly made in plastic.

US3541855 (Frenzen et al, 1970) describes an anemometer for wind velocity measurement. In such applications, the axis of the wheel is vertical and the torque to rotate the wheel requires the fluid velocity to be greater than a certain minimum velocity.

Gravity fed water purification devices typically operate at lower flow rates, where water flows under relatively small head with flow being intermittent. One such device is described in W02004000732 (Unilever) that comprises a filtration unit for removal of particulate material, a biocide unit for adding a biocide to water and a scavenger unit to remove biocide or its byproducts from water. The device operates in a semi-batch mode with the user adding about 10 kg water in each batch and replenishing the water as and when water is consumed. The individual components, i.e. the filtration unit, the biocide unit, and the scavenger unit are designed to be replaced after flow of a predetermined mass of water, typically of the order of 2000 kg.

However, as users do not have a record of water consumption, they find it difficult to know when the components need to be replaced. Premature replacement of components leads to wastage, whilst delayed replacement leads to problems such as choking of the filter or results into water with unacceptable quality in terms of microbial removal and/or taste/odour. Therefore, it is important that the user gets some indication from the water purification device as to when the components are to be replaced.

Water purification device with an end-of-life indicator that visually indicates the need for replacement of biocide tablets are known. In such devices, all the components are designed to be replaced at the same time as that of the tablet.

Whilst the biocide tablets are easy to replace, replacement of scavenger and filter require opening, disassembling and reassembling the device causing inconvenience. The devices of prior art do not provide the flexibility to design individual components with different useful lifetimes that allow relatively less frequent replacements of difficult-to-reach components.

End-of-life indicators based on mass flow meters known in the art are difficult to incorporate in gravity fed water purification device as it would be expensive and/or would require external power source and/or would make the device bulky.

Present inventors have found that a bucket wheel assembly with axis of the wheel not being vertical allows measurement of total mass flow, even with very low liquid velocities or with intermittent flow and can be effectively used as an end-of-life indicator in a gravity fed water purification system.

### Summary of the Invention

According to a first aspect of the invention, there is provided a total mass flow meter for liquids comprising a plurality of cups peripherally mounted on a wheel having an axis which is not vertical and the wheel is encased in a housing having an inlet and an outlet defining a flow path where liquid flows downwards from said inlet into one of the cups until liquid accumulated in the cup causes the wheel to rotate such that the liquid in the cup tips over and exits through the outlet with another cup positioned in the path of the liquid flowing down from the inlet, and the wheel is operatively connected to a counter means for counting number of revolutions of the wheel.

According to a second aspect of the invention, there is provided a water purification device comprising the total mass flow meter of the first aspect, said total mass flow meter being in fluid communication with the device.

According to a third aspect of the invention, there is provided a method for measurement of total mass flow of a liquid stream by the steps of:
(a) passing the liquid stream through the total mass flow meter of the first aspect, and
(b) by converting the number of revolutions into total mass flow of the liquid stream by multiplying by a predetermined calibration constant.

These and other aspects, features and advantages will become apparent to those of ordinary skill in the art from a reading of the following detailed description and the appended claims. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the specific embodiments given in the description below are intended to clarify the invention and are not intended to limit the invention to those embodiments per se.

### Brief Description of the Drawings

Figure 1 - Isometric view of an embodiment of a total mass flow meter.
Figure 2 - Isometric view of an embodiment of a wheel
Figure 3 - Front and side view of an embodiment of a total mass flow meter
   (a) Before passage of predetermined mass of liquid
   (b) After passage of predetermined mass of liquid

### Detailed Description of the Invention

### The total mass flow meter

The total mass flow meter of the present invention is for measurement of total mass of liquids, gels, pastes, free-flow powders and the like. The total mass flow meter of the present invention is not capable of measurement of gas flow.

The total mass flow meter comprises a plurality of cups peripherally mounted on a wheel. Preferably the number of cups is from 2 to 12, more preferably from 4 to 10 and most preferably from 4 to 6. The wheel is encased in a housing having an inlet and an outlet defining a flow path where liquid flows downwards from the inlet into one of the cups until gravitational force due to accumulated mass of the liquid in the cup provides sufficient torque to rotate the wheel such that the liquid in the cup tips over and exits through the outlet and emptying of the cup reduces the torque such that the wheel stops rotating with another cup positioned in the path of liquid flowing down from the inlet such that the revolutions of the wheel are proportional to total mass of liquid passed through the total mass flow meter. Each of the cups includes a container capable of holding the liquid. The wheel is positioned such that the containers are in the path of incoming liquid. The total mass flow meter comprises a counter means operatively connected to the wheel and capable of counting the number of the revolutions of the wheel. It is essential that the axis of the wheel is not vertical because in that case the gravitational force on liquid accumulated in the cup can not provide any torque to rotate the wheel and the revolutions of wheel will be dependent on momentum of the liquid resulting into inability of wheel to rotate under conditions of low liquid velocity or intermittent flow. The inclination of the axis of the wheel with respect to the vertical is preferably at least 30°, more preferably at least 45° and most preferably at least 60°. It is particularly preferred that the inclination of the axis of the wheel with respect to the vertical is less than 5°, or even more preferably less than 1 °. The best results are obtained when the axis of the wheel is horizontal.

According to one of the preferred aspects, the wheel comprises plurality of radial vanes radiating from a shaft and enclosed between two circular plates coaxially mounted on the wheel such that the cups are in the form of enclosures bound by the shaft, the plates and adjacent vanes and such enclosures act as container.

It is essential that the each of the cups includes a container capable of holding the liquid. In absence of the container, the liquid may bypass directly to the outlet or enough quantity of liquid may not accumulate in the cups to rotate the wheel leading to inaccurate measurement of the total mass flow. The cross-sectional area of the opening of the container is preferably larger than the cross sectional area of the inlet. This ensures that the liquid does not bypass the cups leading to inaccuracies in total mass flow rate. Preferably the ratio of the cross-sectional area of the opening of the container to the cross-sectional area of the inlet is greater than 1.2, more preferably greater than 1.5.

Preferably the inlet is positioned in such a way that the liquid flows downwards into the cups. The angle of entry of the liquid into the flowmeter is preferably within 10°, more preferably within 5° and most preferably within 3° from the vertical axis. It is particularly preferred that the liquid flows vertically downwards into the cups.

Preferably the inlet is located on the housing such that the inlet is at an offset with respect to a vertical line passing through the centre of the wheel. The offset is preferably at least 5 mm, more preferably at least 10 mm. The offset ensures that the torque is always applied in the same direction resulting into unidirectional revolution of the wheel. If the inlet is located vertically above the inlet, the torque due to gravitational force on the liquid accumulated in the cup is insufficient to cause the rotation of the wheel, or may cause the wheel to rotate in the opposite direction leading to inaccurate measurement of total mass flow due to underestimation of number of revolutions.

The counter means is operatively connected to the wheel. Any revolution counter capable of counting number of revolutions of the wheel can be used as the counter means. Counter means may be contact type (physically connected with the wheel) or of non-contact type (not physically connected to the wheel.

Preferably the counter means is operatively connected to an indicia to indicate the total mass of liquid passed through the total mass flow meter. The indicia may be visual, audio or in form of an electrical signal that may be transmitted to an electronic display or a computer.

Preferably the counter means is operatively connected to a signal means to indicate that a predetermined mass of liquid has flown through the total mass flow meter. The passage of predetermined amount of liquid may be indicated by a different color or an audio alarm.

Preferably the total mass flow meter comprises a valve means operatively connected to the counter means such that the valve means is actuated to shut off the liquid flow through the mass flow meter after passage of the predetermined mass of liquid through the mass flow meter.

The mass flow rate of the liquid through the mass flow meter is preferably less than 10 kg/min, more preferably less than kg/min, and most preferably less than 2 kg/min. It is particularly preferred that the mass flow rate is less than 1 kg/min. Best results are obtained when the flow rate is less than 0.5 kg/min, even more preferably less than about 0.4 kg/min.

The mass flow meter preferably operates under relatively small pressure head. The pressure head is preferably less than 10 m, more preferably less than 5 m and most preferably less than 1 m. It is particularly preferred that the pressure head is less than 0.5 m.

Preferably, the pressure head is gravitational head.

Preferably, the inlet is in fluid communication with a liquid reservoir and the maximum level of liquid in the reservoir positioned above the inlet and the difference between the maximum liquid level of the reservoir inlet is preferably less than 10 m, more preferably less than 5 m and most preferably less than 1 m. It is particularly preferred that the difference between the maximum liquid level of the reservoir inlet is less than 0.5 m, or even less than 0.4 m.

The total mass flow meter of the present invention is particularly suited for the measurement of total mass flow of liquids as the mass flow meter, if used with gels, pastes or free flow solids is prone to problems of choking of the flow. The total mass flow meter of the present invention is particularly suited for the liquids having viscosity lower than 1000 cP. The problem of choking is particularly severe when the head is low.

According to a third aspect of the invention, there is provided a method for measurement of total mass flow of a liquid stream by the steps of:
(a) passing the liquid stream through the total mass flow meter of the first aspect, and
(b) by converting the number of revolutions into total mass flow of the liquid stream by multiplying by a predetermined calibration constant.

The calibration constant may be calculated experimentally. Alternatively, the calibration constant may be estimated to be equal to the volume of all the cups multiplied by the density of the liquid, which is equivalent to the mass of the liquid that passes through the liquid flow meter in one revolution. The estimation of calibration constant is correct only when the impingement velocity, i.e. the velocity of the liquid flowing downwards from the inlet into one of the cups, is less than a certain threshold value so that the torque provided by the momentum of the impinging stream is insufficient to cause the rotary motion of the wheel.

The velocity of impingement. i.e. the velocity of the liquid flowing downwards from the inlet into one of the cups is calculated by dividing the volumetric flow rate by the cross-sectional area of the inlet.

The velocity of impingement is preferably less than 15 m/s, more preferably less than 10 m/s and even more preferably less than 5 m/s. The present inventors have found that when the impingement velocity is higher than 15 m/s, the torque needed to rotate the wheel, or at least a part thereof, is provided by the momentum of the liquid stream impinging on the cups, rather than gravitational force exerted due to the mass of the liquid accumulated in the cups, and in such a case, the total mass flow calculated from the number of revolutions is inaccurate as it overestimates the calibration factor. Furthermore, even if the calibration factor is determined experimentally, it corresponds to only one specific velocity of impingement at which it is measured, and provides inaccurate total mass flow when the velocity (or flowrate) is intermittent or variable. Variable velocities are encountered when the flow is due to gravity. As the gravitational head decreases, the velocity decreases resulting into inaccurate measurement of the total mass flow.

The cross-sectional area of the inlet is preferably from about 0.01 cm² to about 5 cm². Without wishing to be limited by any theory, it is believed that the selective range of the cross-sectional area allows on the one hand that the liquid impingement velocity is within required value such that the momentum of liquid impinging the cup does not provide sufficient torque to cause the wheel to rotate and on the other hand reduces or substantially eliminates the amount of liquid that may bypass the cups and reach the outlet leading to inaccurate mass flow results. Particularly the combination of selective cross-sectional area and low flow rate is believed to provide the desired results. The cross-sectional area is preferably less than 5 cm², more preferably less than 3 cm², and even more preferably less than 2 cm² more preferably less than 1.5 cm². The cross-sectional area of the inlet is preferably greater than 0.04 cm² more preferably greater than 0.25 cm2, and even more preferably greater than 0.5 cm².

### The water purification device

The water purification device according to the invention comprises the total mass flow meter. The total mass flow meter is in fluid communication with the device. The water purification device may be an in-line device that is attached to a tap or may be a gravity fed water purification device. Preferably the device is a gravity fed water purification device.

Preferably, the total mass flow meter is positioned in the device such that all water passing through the device passes through the total mass flow meter.

Preferably, the water purification device comprises at least one component that needs to be replaced after passage of a predetermined mass of water through the device.

Preferably, the component is selected from:
a. a filtration unit adapted to filter particulate material from the water, or
b. a biocide unit adapted to add a biocide into the water, or
c. a scavenger unit adapted to remove the biocide or byproduct thereof from the water.

Preferably the signal means indicates that the component needs replacement after passage of a predetermined mass of water.

Preferably, the valve means shuts off the flow of water through the device after passage of the predetermined mass of water through the device. The valve means may be positioned anywhere in the flow path of water in the water purification device. Preferably the valve means is positioned at the inlet or the outlet of the total mass flow meter.

Any type of water purification devices known in the art may be used according to the present invention. One non-limiting example of a gravity fed water purification device that can be used is disclosed in W02004000732 (Unilever) which is incorporated herein by reference. The gravity fed water purification device comprises a filtration unit adapted to filter particulate material, and a

biocide unit containing a biocide, in which the biocide is housed in a sealed chamber and is in fluid communication with the filtration unit such that water treated by the filtration unit is then gravity fed into the biocide unit and retained therein for a predetermined period, after which the water exits the system via a scavenger unit which is adapted to recover leached biocide. The device includes a purification unit which in turn includes a top chamber and a bottom chamber separated by a partition and the filtration unit is secured to the partition and housed in the top chamber and the chemical purifying unit is housed in the bottom chamber. In use, water is poured into the top chamber and the purified water substantially free from particulate material, chemical purifying agent and microorganisms flows into a dispensing chamber for consumption. In this gravity fed water purification device, the components that need replacement include the filtration unit, the biocide unit, and the scavenger unit. The mass flow meter is preferably positioned downstream of the filtration unit to ensure that water passing the mass flow meter is substantially free of particulates that may clog the mass flow meter. More preferably the total mass flow meter is positioned downstream of the scavenger to ensure that the water passing through the device is substantially free from halogen or derivatives thereof that may potentially corrode the total mass flow meter.

The mass flow meter, in particular the parts thereof that are likely to contact water are made of food grade material. Food grade materials that can be used include acrylic, acrylonitrile butadiene styrene, and styrene acrylonitrile,

### Detailed Description of the Drawings

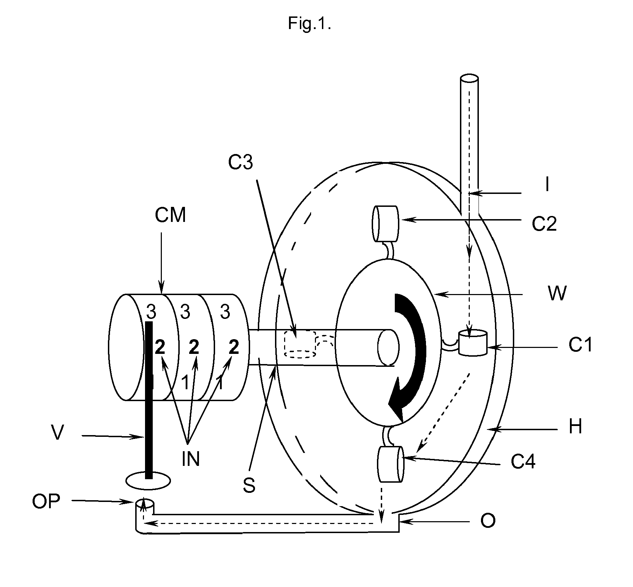

Now referring to Figure 1, a total mass flow meter comprising four cups (C1-C4) peripherally mounted on a wheel (W) having a horizontal axis. The wheel is encased in a housing (H) having an inlet (I) and an outlet (O) defining the flow

path (shown by dashed arrows) where the liquid flows downwards from the inlet (I) into one of the cups (C1) until gravitational force due to the mass of the liquid accumulated in the cup (C1) provides sufficient torque to rotate the wheel (W) such that the liquid in the cup (C1) tips over and exits through the outlet (O) and emptying of the cup (C1) reduces the torque such that the wheel stops rotating with another cup (C2) is positioned in the path of liquid flowing down from the inlet (I). The mass flow meter comprises a counter means (CM) operatively connected to the wheel (W) by a shaft (S). The counter means (CM) is capable of counting number of revolutions of the wheel (W) which are proportional to total mass of liquid passed through the total mass flow meter and the counter means (CM) is operatively connected to a visual indicia (IN) to indicate the total mass of liquid passed through the total mass flow meter. The total mass flow meter comprises a valve means (V) capable of being actuated by the counter means (CM) to shut off the liquid flow through the mass flow meter such that the liquid flow through the flow meter is shut off after passage of the predetermined mass of liquid through the mass flow meter. When the predetermined mass of liquid corresponding to 300 revolutions has passed through the meter, the valve means (V) is actuated to move downwards to close the opening (OP) thereby shutting off the flow through the mass flow meter. As the torque required for rotation of the wheel is provided by gravitational force on the mass of liquid accumulate in the cups, the total mass flow meter is relatively more compact as compared to the total mass flow meters where the torque required for rotation of the wheel is provided by the momentum of liquid.

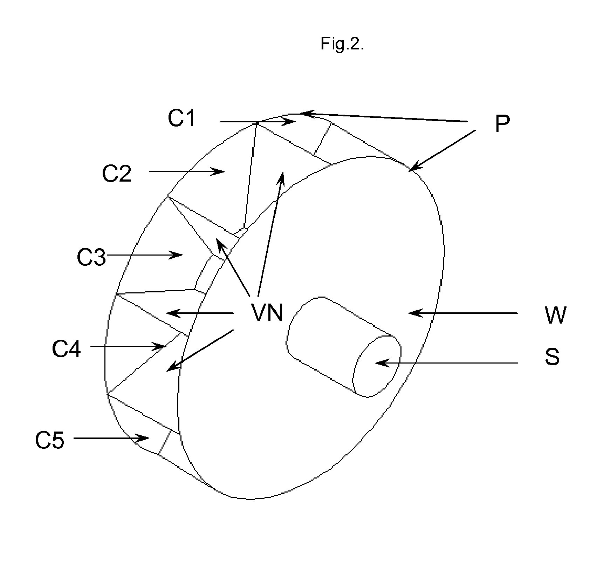

Now referring to Figure 2, the wheel (W) comprises plurality of radial vanes (VN) radiating from a shaft (S) and enclosed between two circular plates (P) coaxially mounted on the wheel such that the cups (C1-C5) are in the form of enclosures bound by the shaft, the plates and adjacent vanes.

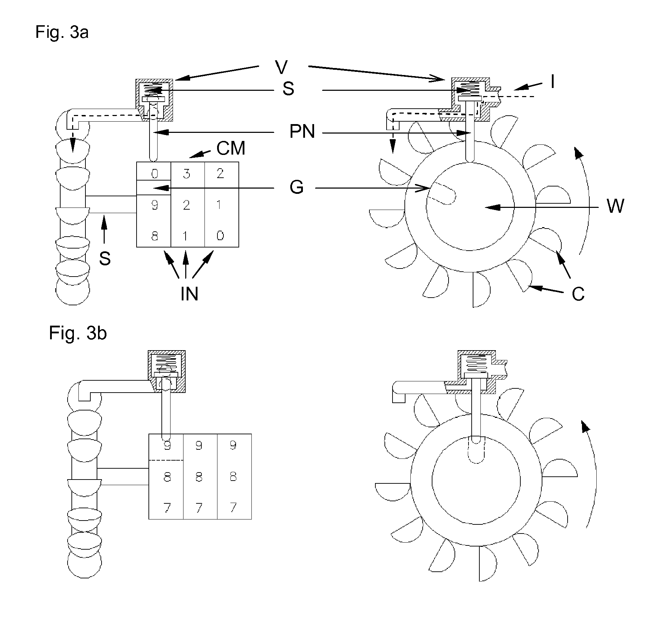

Now referring to Figure 3, an embodiment of the total mass flow meter is depicted. For clarity and convenience, the housing of the wheel and the outlet are not depicted. The wheel (W) comprises cups (C) and is mounted on a shaft (S). The counter means (CM), coaxially mounted on the shaft (S), comprises indicia (IN) mounted on three disks, with one revolution of each disk being equivalent to 1/10^{th} of the revolution of an adjacent disk on the right hand side. The counter means (CM) comprises a groove (G). The groove (G) is positioned on the counter means at the number of revolutions that corresponds to the passage of a predetermined mass of the liquid. The total mass flow meter comprises a valve means (V) positioned in the flow path indicated by the dashed arrows near the inlet (I). The valve means (V) comprises a spring actuator (S) connected to a pin (PN) that rests on the counter means (CM) before the passage of the predetermined mass of liquid as shown in Figure 3(a). After the passage of the predetermined mass of liquid, the revolutions of the counter means (CM) bring the groove (G) in a position for engagement with the pin (PN). The pin (PN) is pushed into the groove (G) by the spring actuator (S) shutting of the liquid flow through the valve means (V) as shown in Figure 3(b).

It will be appreciated that the total mass flow meter of the present invention allows measurement of total mass flow even with very small liquid velocities and can be effectively used as an end-of-life indicator in a water purification system.

## Claims

1. A total mass flow meter for liquids comprising a plurality of cups peripherally mounted on a wheel having an axis which is not vertical and the wheel is encased in a housing having an inlet and an outlet defining a flow path where liquid flows downwards from said inlet into one of the cups until liquid accumulated in the cup causes the wheel to rotate such that the liquid in the cup tips over and exits through the outlet with another cup positioned in the path of liquid flowing down from the inlet, and the wheel is operatively connected to a counter means for counting number of revolutions of the wheel wherein each of the cups includes a container capable of holding the liquid.

2. A total mass flow meter as claimed in claim 1 wherein said counter means is operatively connected to an indicia to indicate the total mass of liquid passed through the total mass flow meter.

3. A total mass flow meter as claimed in claim 2 wherein said counter means is operatively connected to a signal means to indicate that a predetermined mass of liquid has flown through the total mass flow meter.

4. A total mass flow meter as claimed in any one of the preceding claims comprising a valve means operatively connected to said counter means such that the valve means is actuated to shut off the liquid flow through the mass flow meter after passage of the predetermined mass of liquid through the mass flow meter.

5. A total mass flow meter as claimed in any one of the preceding claims wherein said wheel comprises plurality of radial vanes radiating from a shaft and enclosed between two circular plates coaxially mounted on said wheel such that the cups are in the form of enclosures bound by the shaft, the plates and adjacent vanes.

6. A total mass flow meter as claimed in any one of the preceding claims wherein the inlet is located on the housing such that the inlet is at an offset with respect to a vertical line passing through the centre of the wheel.

7. A total mass flow meter as claimed in any one of the preceding claims wherein the cross-sectional area of the opening of the container is larger than the cross sectional area of the inlet.

8. A total mass flow meter as claimed in any one of the preceding claims wherein the cross-sectional area of the inlet is preferably from about 0.01 cm² to about 5 cm².

9. A water purification device comprising the total mass flow meter as claimed in any one of the preceding claims, said total mass flow meter being in fluid communication with the device.

10. A water purification device as claimed in claim 9 comprising at least one component that needs to be replaced after passage of a predetermined mass of water through the device.

11. A water purification device as claimed in any one of claims 9 or 10 wherein said component is selected from:
a. a filtration unit adapted to filter particulate material from the water, or
b. a biocide unit adapted to add a biocide into the water, or
c. a scavenger unit adapted to remove the biocide or byproduct thereof from the water.

12. A water purification device as claimed in any one of claims 9, 10, or 11 wherein said signal means indicates that the component needs replacement after passage of said predetermined mass of water.

13. A water purification device as claimed in claim any one of claims 9-12, wherein said valve means shuts off the flow of water through the device after passage of said predetermined mass of water through the device.

14. A method for measurement of total mass flow of a liquid stream by the steps of:
a. passing the liquid stream through the total mass flow meter of claim 1, and
b. by converting the number of revolutions into total mass flow of the liquid stream by multiplying by a predetermined calibration constant.

15. A method as claimed in claim 14 wherein the liquid impingement velocity is less than 15 m/s.
